# EUROPÄISCHE PATENTANMELDUNG

(11) **EP 3 683 395 A1**
(43) Veröffentlichungstag der Anmeldung: **22.07.2020**
(21) Anmeldenummer: 19213394.0
(22) Anmeldetag: 04.12.2019
(51) Int. Cl.: E05F 5/02

(54) **VORRICHTUNG ZUR BEWEGUNGSDÄMPFUNG EINES MÖBELTEILS UND FÜHRUNGSVORRICHTUNG**

(30) Priorität: 16.01.2019 DE 202019100230 U
(71) Anmelder: Grass GmbH, 6973 Höchst (AT)
(72) Erfinder: Schulz, André, 6972 Fussach (AT)
(74) Vertreter: Otten, Roth, Dobler & Partner mbB Patentanwälte

(57) **Zusammenfassung**

Es wird eine Vorrichtung zur Bewegungsdämpfung eines bewegbaren Möbelteils vorgeschlagen, umfassend ein Gehäuse (3) mit einem Verschieberaum (21) und Kolbenmitteln, wobei in einem Regel-Dämpfungsbetrieb ein Teil eines Fluids (19) im Verschieberaum über einen Regel-Strömungsweg von einem ersten Teilvolumen (22) in ein zweites Teilvolumen (23) strömt, wobei für einen Überdruck-Dämpfungsbetrieb die Kolbenmittel einen Überdruck-Strömungsweg und einen Verschlusskörper zum Absperren und Freigeben des Überdruck-Strömungsweges umfassen, wobei eine erste Seite des Verschlusskörpers vom Druck im ersten Teilvolumen (22) beaufschlagt ist und wobei in einer Überdrucksituation im ersten Teilvolumen (22) der Überdruck-Strömungsweg (30) freigegeben ist für ein Überströmen von Fluid (19) vom ersten Teilvolumen (22) in das zweite Teilvolumen (23). Erfindungsgemäß ist ein Andrückabschnitt aus einem Elastomermaterial vorhanden ist, welcher gegen eine zweite Seite des Verschlusskörpers derart andrückt, dass im Regel-Dämpfungsbetrieb der Verschlusskörper den Überdruck-Strömungsweg absperrt, wobei bei einer Überdrucksituation im ersten Teilvolumen (22) der Verschlusskörper eine Ausweichbewegung in Richtung des Andrückabschnitts erfährt, wobei entsprechend der Ausweichbewegung des Verschlusskörpers eine Vertiefung im Andrückabschnitt durch elastische Verformung des Andrückabschnitts ausbildbar ist und ein Eintauchen des Verschlusskörpers in die Vertiefung stattfindet.

## Beschreibung

### Stand der Technik

Es sind Dämpfvorrichtungen zur Bewegungsdämpfung eines relativ zu einem Möbelkorpus bewegbaren Möbelteils wie einer Schublade, Möbeltüre oder Möbelklappe bekannt. Das Möbelteil wird über eine Führungsvorrichtung am Möbel bewegt, zum Beispiel über eine Schienenführung. Die Dämpfvorrichtung wie eine Möbelteil-Dämpfvorrichtung umfasst ein Gehäuse und einen darin verschieblichen Kolben. Die Dämpfung der Bewegung des Möbelteils verhindert unerwünschte Zu- bzw. Anschlaggeräusche und stoßartige Belastungen des Möbels insbesondere beim Schließen des Möbelteils. Die Dämpfvorrichtung selbst muss dabei erheblichen dynamischen bzw. mechanischen Belastungen standhalten.

Bei dem Dämpfvorgang, wenn z. B. der Kolben sich entlang eines Verschieberaums bewegt, der im Gehäuse bereitgestellt ist und in dem ein Dämpfungsfluid untergebracht ist, strömt durch den sich bewegenden Kolben ein Teil des Dämpfungsfluid entlang eines zum freien Querschnitt des Verschieberaums stark verringerten freien Querschnitt eines Regel-Strömungswegs von einem ersten Teilvolumen des Verschieberaums im Gehäuse in ein zweites Teilvolumen des Verschieberaum, was unter Überwindung eines Strömungs-Widerstands gegen die Kolbenbewegung erfolgt, worin die eigentliche Dämpfung begründet ist, da der Kolben in seiner Verschiebegeschwindigkeit begrenzt ist. Die Teilvolumina sind durch den Kolben getrennt. Abhängig von dem Volumenstrom des überströmenden Dämpffluids ergibt sich die Kolben-Verschiebegeschwindigkeit. Bei höchsten und/oder kurzzeitig auftretenden Belastungsspitzen, zum Beispiel wenn das Möbelteil stark in die Schließrichtung beschleunigt wird, wirken aufgrund des nur limitiert möglichen Fluidstroms in der Dämpfvorrichtung Kräfte und/oder Momente, die über ein für die Dämpfvorrichtung tolerierbares Maß hinausgehen können. Entsprechende Verhältnisse treten auf, wenn die Viskosität des Dämpffluids gegenüber einer Viskosität, für welche die Dämpfvorrichtung ausgelegt ist, stark ansteigt, z. B. bei tieferen Umgebungstemperaturen, was beispielsweise bei Anwendungen in Kühl- oder Gefriergeräten der Fall ist.

In einem entsprechenden Überdruck-Dämpfungsbetrieb der Dämpfvorrichtung sind Kolbenmittel mit einem Überdruck-Strömungsweg und einem Verschlusskörper zum Absperren und Freigeben des Überdruck-Strömungsweges bekannt. Hier setzt die Erfindung an.

### Aufgabe und Vorteile der Erfindung

Aufgabe der vorliegenden Erfindung ist es, eine Vorrichtung bzw. eine Führungsvorrichtung der eingangs beschriebenen Art bereitzustellen, bei welcher die Dämpfung der Bewegung eines Möbelteils im Hinblick auf außergewöhnliche Belastungssituationen vorteilhaft möglich ist. Insbesondere soll ein über alle Einsatzbedingungen vorteilhaftes bzw. gewünschtes Wirkverhalten der Dämpfvorrichtung bereitgestellt werden bzw. sollen nachteilige Auswirkungen auf die Dämpfvorrichtung aufgrund von Belastungsspitzen im Betrieb zum Beispiel aufgrund einer vergleichsweise hohen Viskosität des Dämpffluids vermieden werden.

Diese Aufgabe wird durch die unabhängigen Ansprüche gelöst.

Die abhängigen Ansprüche thematisieren vorteilhafte und zweckmäßige Varianten der Erfindung.

Die Erfindung geht aus von einer Vorrichtung zur Bewegungsdämpfung eines relativ zu einem Möbelkorpus bewegbaren Möbelteils, insbesondere von einer Möbelteil-Dämpfvorrichtung, umfassend ein Gehäuse, das einen mit einem Fluid beaufschlagten bzw. gefüllten Verschieberaum umschließt, in welchem Kolbenmittel aufgenommen sind, wobei das Gehäuse oder die Kolbenmittel mit dem Möbelteil koppelbar sind, so dass bei einer Relativ-Schiebebewegung zwischen dem Gehäuse und den Kolbenmitteln, die Bewegungsdämpfung des Möbelteils erfolgt, wobei in einem Regel-Dämpfungsbetrieb der Vorrichtung ein Teil des Fluids über einen Regel-Strömungsweg von einem ersten Teilvolumen des Verschieberaums in ein zweites Teilvolumen des Verschieberaums strömt, wobei die Aufteilung des Verschieberaums in die beiden Teilvolumina durch die Verschiebeposition zwischen den Kolbenmitteln und dem Gehäuse bestimmt ist, wobei für einen Überdruck-Dämpfungsbetrieb der Vorrichtung die Kolbenmittel einen Überdruck-Strömungsweg und einen Verschlusskörper zum Absperren und Freigeben des Überdruck-Strömungsweges umfassen, wobei eine erste Seite des Verschlusskörpers vom Druck im ersten Teilvolumen des Verschieberaums beaufschlagt ist und wobei in einer Überdrucksituation im ersten Teilvolumen des Verschieberaums der Überdruck-Strömungsweg freigegeben ist für ein Überströmen von Fluid vom ersten Teilvolumen in das zweite Teilvolumen.

Vorzugsweise ist der Verschlusskörper Teil einer Ventilanordnung bzw. einer Überdruck-Ventilanordnung. Die Überdruckventilanordnung ist zum Beispiel den Kolbenmitteln zugehörig bzw. ist in den Kolbenmitteln integriert. Die Kolbenmittel umfassen insbesondere die Überdruck-Ventilanordnung. Die Ventilanordnung weist einen vorzugsweise vorgebbaren Schaltdruck auf. Die Ventilanordnung schaltet auf "OFFEN" bei einem Grenzdruck von vorzugsweise zum Beispiel 40 oder 50 bar in dem ersten Teilvolumen bzw. auf der Hochdruckseite beim Einfahren der Kolbenmittel in Möbelteil-Schließ- bzw. -Dämpfrichtung, so dass bei diesem Grenzdruck die Ventilanordnung den Überdruck-Strömungsweg öffnet. Zuvor bzw. unterhalb des Grenzdruckes im ersten Teilvolumen ist die Ventilanordnung im Schaltzustand "GESCHLOSSEN", so dass unterhalb des Grenzdrucks im ersten Teilvolumen der Überdruck-Strömungsweg für ein durchströmen von Fluid gesperrt ist durch den Verschlusskörper.

Das Fluid bzw. Dämpffluid ist ein zur Dämpfung geeignetes Fluid wie insbesondere ein Öl z. B. ein Silikonöl oder dergleichen und weist eine temperaturabhängige Viskosität auf, wobei bei sinkender Temperatur der Umgebung und damit des Fluids die Viskosität bzw. die Zähigkeit steigt. Abhängig von der Viskosität stellt sich ein dazugehöriges Fließ- bzw. Strömungsverhalten des Dämpffluids ein. Ein übliches Dämpffluid bzw. das Öl weist bei 20 Grad Celsius zum Beispiel eine Viskosität im Bereich von 200 mPas s als SI-Einheit auf und bei z. B. minus 20 Grad Celsius eine Viskosität im Bereich von 2000 mPas s auf.

Der Kern der Erfindung liegt darin, dass ein Andrückabschnitt aus einem Elastomermaterial vorhanden ist, welcher mit einer Andrückseite gegen eine zweite Seite des Verschlusskörpers derart andrückt, dass im Regel-Dämpfungsbetrieb der Vorrichtung der Verschlusskörper den Überdruck-Strömungsweg absperrt, wobei bei einer Überdrucksituation im ersten Teilvolumen des Verschieberaums der Verschlusskörper eine Ausweichbewegung in Richtung des Andrückabschnitts erfährt, wobei entsprechend der Ausweichbewegung des Verschlusskörpers eine Vertiefung in der Oberfläche des Andrückabschnitts durch elastische Verformung des Andrückabschnitts ausbildbar ist und ein Eintauchen des Verschlusskörpers in die Vertiefung stattfindet. Die erste Seite des Verschlusskörpers und die zweite Seite des Verschlusskörpers liegen vorzugsweise sich gegenüber.

Zur Absenkung einer Belastungsspitze zum Beispiel bei gegenüber einer Regelsituation höherer Viskosität und/oder bei Stoßbelastungen, welche die Komponenten der Dämpfvorrichtung belasten, um Beschädigungen am Möbelteil oder am Dämpfer zu vermeiden, wird beim Dämpfvorgang in einer Überdrucksituation im ersten Teilvolumen des Verschieberaums der geschlossene Überdruck-Strömungsweg freigegeben. Somit kann Dämpffluid über den Regel-Strömungsweg und zusätzlich auch noch über den Überdruck-Strömungsweg vom ersten Teilvolumen in das zweite Teilvolumen überströmen, was zur schnelleren Absenkung eines Druckniveaus im ersten Teilvolumen führt. Damit wird vorteilhaft eine homogene Schließcharakteristik der Dämpfvorrichtung erreicht, die nahezu unabhängig von der Viskosität des Dämpffluids bzw. der Umgebungstemperatur ist. Mit der vorteilhaften Homogenität im Wirkverhalten der Dämpfvorrichtung ist die Dämpfvorrichtung außerdem gegen Beschädigungen aufgrund z. B. eines zu hohen Drucks im ersten Teilvolumen z. B. bei vergleichsweise hoher Viskosität des Dämpffluids bzw. bei zum Regelbetrieb vergleichsweise niedrigen Umgebungstemperaturen geschützt.

Diese Schutzfunktion ist daher insbesondere vorteilhaft für Standard-Dämpfvorrichtungen, welche bezüglich der Temperatur in einer Nicht-Standardsituation Anwendung finden, wie bei Anwendungen der Dämpfvorrichtung bei Möbelteilen, die in Kühlgeräten wie Kühlschränken oder Gefrierschränken eingebaut sind. Die vergleichsweise tiefen Umgebungstemperaturen in der Umgebung der Dämpfvorrichtung liegen bei diesen Einsatzgebieten zum Beispiel bei bis unter minus 18 Grad Celsius bis unter minus 30 Grad Celsius. Dabei weist das Dämpffluid eine vergleichsweise hohe Zähigkeit gegenüber einer Zähigkeit bei einer Umgebungstemperatur von zum Beispiel 20 Grad Celsius auf.

Die Dämpfvorrichtung ist insbesondere vorteilhaft bei Führungseinrichtungen für Möbelteile wie beispielsweise Einfach-oder Vollauszüge mit teleskopartig verschieblichen Schienen für eine lineare Möbelteilbewegung zum Beispiel von Schubfächern oder Schubladen vorgesehen oder bei Scharnieranordnungen für eine Schwenkbewegung eines Möbelteils wie einer Möbeltüre oder einer Möbelklappe.

Das Elastomermaterial ist beispielsweise eine Kunststoff-Elastomer, z. B. ein Kautschuk-Elastomer, z. b. ein Gummimaterial oder zum Beispiel ein Schaumstoffmaterial.

In einem Überdruck-Dämpfungsbetrieb drückt das unter Druck stehende Fluid im ersten Teilvolumen auf den Verschlusskörper, so dass der Verschlusskörper sich in eine insbesondere nicht zusammengedrückte Hüllfläche des Andrückabschnitts aus dem Elastomermaterial eindrückt bzw. darin zumindest teilweise eintaucht. Dabei entsteht eine temporäre Vertiefung im Andrückabschnitt gegen die Kraftwirkung aufgrund der MaterialElastizität des Andrückabschnitts. Mit dem Eintauchen des Verschlusskörpers findet gemäß der Vertiefung eine Formveränderung einer Hüllform bzw. der Oberfläche des Andrückabschnitts statt. Dem Verschlusskörper wird damit ein Ausweichweg weg von einer Schließstellung bzw. Absperrstellung zum Absperren des Überdruck-Strömungsweges zum Beispiel weg von einem Ventilsitz der Überdruck-Ventilanordnung bereitgestellt, so dass eine Ventilöffnung geöffnet wird.

Der Andrückabschnitt kann integral an den Kolbenmitteln oder der Kolbenstange ausgebildet sein oder mit den Kolbenmitteln oder der Kolbenstange verbunden sein oder ist vorzugsweise ein separates Bauteil.

Vorteilhaft wird durch das Elastomermaterial sowohl eine Formveränderung des Andrückabschnitts möglich, um den Verschlusskörper aus dem Schaltzustand "GESCHLOSSEN", in welchem der Verschlusskörper z. B. an einem Ventilsitz aufsitzt, herauszubringen, andererseits ist vorteilhaft das reversible Zurückbewegen des Verschlusskörpers in die verschließende Stellung durch die Elastizität selbsttätig vorgegeben. Dies geschieht, wenn keine Überdrucksituation mehr im ersten Teilvolumen herrscht.

Dabei bleibt der Regel-Strömungsweg der Dämpfvorrichtung gemäß dem Regel-Dämpfungsbetrieb unbeeinflusst erhalten, wobei in eine erste Schieberichtung der Kolbenmittel relativ zum Gehäuse im Regel-Dämpfungsbetrieb verdrängtes Fluid vorzugsweise über einen Spaltbereich zwischen den Innenwandungsabschnitten des Gehäuses und den Kolbenmitteln in das zweite Teilvolumen des Verschieberaums gebremst bzw. mit einem reduzierten Volumenstrom überströmt. Der Spaltbereich weist vorzugsweise einen deutlich geringeren Strömungsquerschnitt verglichen mit dem Strömungsquerschnitt des Überdruck-Strömungsweges auf.

Der Verschlusskörper ist vorzugsweise aus einem starren, harten Material wie z. B. aus einem Metall- bzw. Stahlmaterial. Die Form des Verschlusskörpers ist vorzugsweise konvex bzw. ist eine konvexe Form wie vorzugsweise eine Kugelform bzw. der Verschlusskörper ist als Kugel ausgebildet. Stahlkugeln mit einem Durchmesser von wenigen Millimetern bis unter einen Millimeter sind vorteilhaft als Standardprodukte erhältlich.

Insgesamt werden mit der erfindungsgemäßen Vorrichtung unerwünschte höhere mechanische Belastungen auf zumindest die Dämpfvorrichtung und/oder vergleichsweise lange Schließzeiten aufgrund einer erhöhten Viskosität des Dämpfungsfluids vermieden. Die erfindungsgemäße Vorrichtung liefert sowohl bei üblicher Raumtemperatur, z. B. 20 Grad Celsius, als auch bei beliebig niedriger praxisrelevanter Temperatur eine gut anmutende Schließcharakteristik des betreffenden Möbelteils wie z. B. einer Schublade. Dies wird durch den druckabhängig gesteuerten Durchfluss des Dämpfungsfluids in der Vorrichtung durch die beschriebenen Strömungswege erzielt.

Vorteilhaft ist, dass der Andrückabschnitt als separates Bauteil zu verbleibenden Teilen der Vorrichtung ausgebildet ist. Dies ist herstellungstechnisch von Vorteil. Der Andrückabschnitt bzw. das Bauteil ist vorzugsweise aus einem Vollmaterial bzw. aus einem Voll-Elastomermaterial. Das Bauteil besteht bevorzugt einheitlich insbesondere aus genau einem Elastomermaterial über das gesamte Volumen des Bauteils.

Insbesondere ist das Andrückabschnitt-Bauteil vom restlichen Teil der Kolbenmittel trennbar bzw. austauschbar.

Nach einer bevorzugten Ausbildung ist der Andrückabschnitt im Inneren der Kolbenmittel untergebracht.

Vorzugsweise ist der Andrückabschnitt ein Bauteil, das in einem Innenraum bzw.in einem Hohlraum der Kolbenmittel zum Beispiel in einer Ausnehmung wie z. B. einer Bohrung vorhanden ist.

Weiter ist ein Vorteil darin zu sehen, dass der Andrückabschnitt als ein Bauteil mit einer nach außen gewölbten Oberflächenform ausgebildet ist.

Vorzugsweise ist das Andrückabschnitt-Bauteil mit konvexer Oberflächenform im unbelasteten Zustand gebildet bzw. in Kugelform oder in einer an die Kugelform angenäherten Form gebildet. Eine Kugel ist vorteilhaft bezüglich der Montage. Außerdem ist mit einer Kugel eine höhere Prozesssicherheit erreichbar. Der Andrückabschnitt im nicht zusammengedrückten Zustand weist im Vergleich zum Durchmesser des Verschlusskörpers einen vorzugsweise größeren z. B. zweifach größeren Durchmesser auf.

Vorzugsweise ist sowohl der Verschlusskörper als auch der Andrückabschnitt in Kugelform.

Alternativ zur Kugelform des Andrückabschnitt-Bauteils ist auch eine andere Körperform möglich bzw. geeignet, wie zum Beispiel eine Quader- oder Würfelform oder eine Pyramidenform.

Eine vorteilhafte Modifikation der Erfindung ergibt sich, wenn der Andrückabschnitt als ein Vollmaterial-Bauteil ausgebildet ist, wobei das Vollmaterial ein Elastomermaterial insbesondere ein Gummimaterial ist.

Der Andrückabschnitt bzw. das dazugehörige Bauteil ist bevorzugt ein Vollgummiball bzw. eine Vollgummikugel. Alternativ ist der Andrückabschnitt z.B. eine hohle Gummikugel oder z. B. eine Schaumstoffkugel.

Ein weiterer Vorteil kann darin gesehen werden, dass eine Kolbenstange vorhanden ist, welche mit den Kolbenmitteln verbunden ist, wobei eine Raumachse in Verlängerung einer zentralen Längsachse der Kolbenstange durch den Andrückabschnitt verläuft. Die Raumachse verläuft insbesondere durch den Andrückabschnitt-Körper mittig hindurch bzw. durch ein Körperzentrum bzw. zentralen Mittelpunkt des Andrückabschnitts. Bei einem Kugel-Andrückabschnitt verläuft die Raumachse bevorzugt durch den Kugelmittelpunkt des kugelförmigen Andrückabschnitts.

Dies ist platzsparend. Des Weiteren kann sich der Andrückabschnitt mit einer dem Verschlusskörper abgewandten Seite an einer Stirnseite der Kolbenstange abstützen. Die Stirnseite der Kolbenstange kann zum Beispiel eine gewölbte Vertiefung aufweisen, in welcher ein Teil des Kugel-Andrückabschnitts passend sitzt.

Es ist überdies vorteilhaft, dass der Andrückabschnitt in einem zentralen Hohlbereich eines Kolbens der Kolbenmittel untergebracht ist. Damit kann der Überdruck-Strömungsweg für das Fluid bzw. das Dämpffluid im Inneren des Kolbens vorteilhaft vom Verschlusskörper, der in den Andrückabschnitt eindrückbar und wieder von diesem wegdrückbar ist, den Überdruck-Strömungsweg situationsabhängig verschließen und/oder öffnen.

Der Hohlbereich umfasst insbesondere einem Leitungsquerschnitt der Fluidleitung im Kolben, wobei die Fluidleitung zum Beispiel zentrisch durch den Kolben verläuft und/oder senkrecht dazu.

Es wird außerdem vorgeschlagen, dass der Andrückabschnitt zwischen einem Ende der Kolbenstange und dem Verschlusskörper angeordnet ist.

Vorzugsweise berührt eine Seite des Andrückabschnitts einen Abschnitt der Kolbenstange und eine andere Seite des Andrückabschnitts berührt den Verschlusskörper. In Längsrichtung des Gehäuses bzw. der Kolbenstange sind der Andrückabschnitt und der Verschlusskörper hintereinander positioniert.

Im Hinblick auf eine kompakte Bauweise ergibt sich ein Vorteil dadurch, dass ein Außenmaß des Andrückabschnitts nicht über ein Außenmaß der Kolbenstange hinausgeht, insbesondere nicht über einen Durchmesser der Kolbenstange hinausgeht.

Vorzugsweise ist der Andrückabschnitt als Kugelbauteil zentral vor einer Stirnseite der insbesondere zylindrischen Kolbenstange positioniert, wobei Außenabschnitte des Andrückabschnitts nicht über eine Verlängerung der Außenseite der Kolbenstange hinausragt. Vorzugsweise ist der Kugeldurchmesser des Kugel-Andrückabschnitts gleich oder kleiner als der Durchmesser der z. B. zylindrischen Kolbenstange im Bereich des Kolbens.

Eine andere vorteilhafte Variante der Erfindung zeichnet sich dadurch aus, dass der Verschlusskörper und/oder der Andrückabschnitt in einem Bereich vorhanden sind, in welchem der Überdruck-Strömungsweg eine Richtungsänderung erfährt. Damit ist der Kolben kompakt ausbildbar.

Vorzugsweise umfasst der Überdruck-Strömungsweg mehrere gebogene oder geradlinige Strömungsweg-Abschnitte, die in unterschiedliche Richtungen ausgerichtet sind. Vorzugsweise sind der Verschlusskörper und/oder der Andrückabschnitt in einem Kreuzungsbereich vorhanden, in dem zwei Strömungsweg-Abschnitte winklig bzw. rechtwinklig aufeinander treffen.

Gemäß einer bevorzugten Ausbildung umfasst der Überdruck-Strömungsweg einen zur Längsachse des Gehäuses parallelen ersten Strömungsweg-Abschnitt und einen zum ersten Strömungsweg-Abschnitt quer oder schräg oder parallel verlaufenden weiteren Strömungsweg-Abschnitt. Zwischen dem ersten Strömungsweg-Abschnitt, zum Beispiel ein in einem Kolben-Grundkörper zentraler Fluidkanal, und dem weiteren Strömungsweg-Abschnitt ist vorzugsweise der Verschlusskörper positioniert. Die Strömungsweg-Abschnitte sind vorzugsweise im Innern der Kolbenmittel, zum Beispiel dem Kolbenmittel-Grundkörper oder einem Zapfenabschnitt der Kolbenmittel, und/oder außen an den Kolbenmitteln bzw. angrenzend an die Kolbenmittel ausgebildet, insbesondere als Fluidleitung bzw. als Fluidkanal.

Weiter bevorzugt ist es, wenn der Kolben der Kolbenmittel eine scheibenförmige Grundform aufweist, mit beidseitig axial vorstehenden Zapfenabschnitten. Von vorzugsweise zwei zentrischen Zapfenabschnitten bildet beispielsweise ein erster Zapfenabschnitt mit einem Kanal oder einer Leitung im Inneren einen Teil des Überdruck-Strömungsweges für das Fluid. Ein zweiter Zapfenabschnitt weist insbesondere eine zentrale Vertiefung zur Verbindung mit der Kolbenstange auf.

Als vorteilhafte Gestaltung ist ein Aufnahmeraum der Kolbenmittel für die Unterbringung des Andrückabschnitts vorgesehen, wobei der Aufnahmeraum mit dem Überdruck-Strömungsweg verbunden ist.

Beispielsweise ist der Aufnahmeraum offen verbunden mit einem Volumen des Überdruck-Strömungswegs.

Die Erfindung erstreckt sich darüber hinaus auf eine Führungsvorrichtung für die Bewegungsführung eines relativ zu einem Möbelkorpus bewegbaren Möbelteils mit einer erfindungsgemäßen Vorrichtung gemäß einer der oben beschriebenen Varianten.

Die Führungsvorrichtung ist als Schienenführung insbes. für Schubladen ausgebildet zum Beispiel als Teil- oder Vollauszug. Alternativ ist die Führungsvorrichtung als Möbelscharnier für eine Möbelklappe oder Möbeltüre gestaltet.

### Figurenbeschreibung

Weitere Merkmale und Vorteile der Erfindung sind nachfolgend anhand von schematisch dargestellten erfindungsgemäßen Ausführungsbeispielen näher erläutert.

Im Einzelnen zeigt:

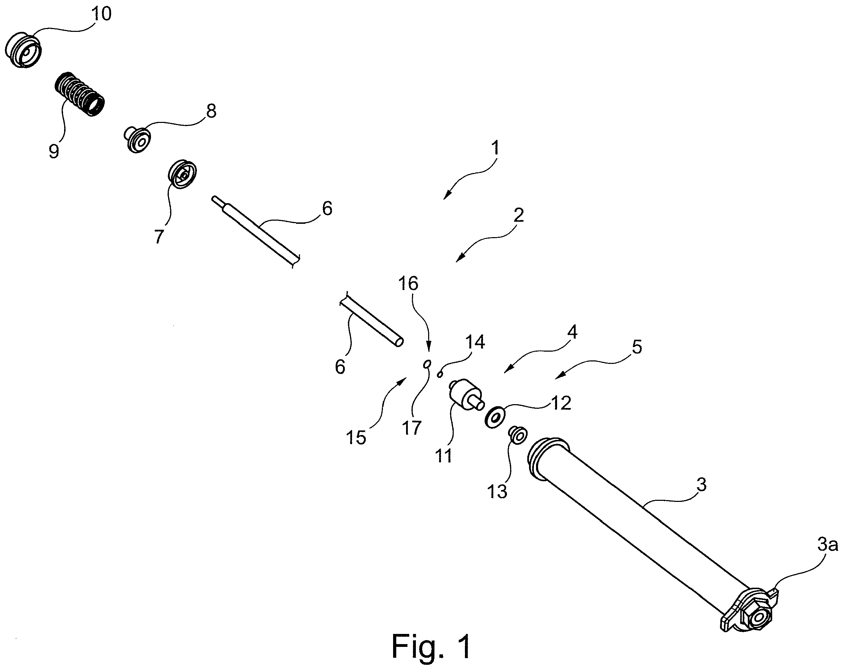

- Fig. 1: eine teils unterbrochen dargestellte Explosionsdarstellung eines Ausführungsbeispiels einer erfindungsgemäßen Vorrichtung,
- Fig. 2: einen Abschnitt der gemäß Fig. 1 zusammengebauten Vorrichtung gemäß Fig. 1 in einem Regel-Dämpfungsbetrieb in Schnittdarstellung,
- Fig. 3: einen vergrößert dargestellten Ausschnitt aus Fig. 2,
- Fig. 4: einen Abschnitt der gemäß Fig. 1 zusammengebauten Vorrichtung in einem Überdruck-Dämpfungsbetrieb in Schnittdarstellung,
- Fig. 5: einen vergrößert dargestellten Ausschnitt aus Fig. 4,
- Fig. 6: einen Abschnitt der Vorrichtung gemäß Fig. 4 in einer Ruhe-Stellung bei eingefahrener Kolbenstange in Schnittdarstellung,
- Fig. 7: einen vergrößert dargestellten Ausschnitt aus Fig. 6,
- Fig. 8: den vergrößert dargestellten Ausschnitt aus Fig. 7 bei geöffneter Dichtscheibe und
- Fig. 9: einen Abschnitt einer Variante einer erfindungsgemäßen Vorrichtung in einer Ruhe-Stellung gemäß der Ansicht aus Fig. 7.

Für sich entsprechende Elemente der erfindungsgemäßen Ausführungsvarianten sind teils die gleichen Bezugszeichen verwendet.

Eine erfindungsgemäße Vorrichtung 1 zur Bewegungsdämpfung eines Möbelteils wie z. B. einer verschieblich an einem Möbelkorpus eines Möbels aufgenommenen Schublade ist gemäß dem gezeigten erfindungsgemäßen Ausführungsbeispiels als Öl- bzw. Liquiddämpfer 2 ausgebildet. Der Liquiddämpfer 2 umfasst ein Gehäuse 3 mit einem Gehäuseflansch 3a, Kolbenmittel 4, die als Kolbenbaugruppe 5 ausgestaltet sind, eine Kolbenstange 6, einen Trennkolben 7, ein Stützelement 8, eine Druckfeder 9 und einen Deckel 10.

Die Kolbenbaugruppe 5 wiederum weist einen Kolben 11, eine Dichtscheibe 12, ein Sicherungselement 13, einen Verschlusskörper 14 und einen als Federelement 16 ausgebildeten Andrückabschnitt 15 auf. Das Federelement 16 ist beispielhaft in Form einer Gummikugel 17 gestaltet. In den Kolbenmitteln 4 ist eine Überdruck-Ventilanordnung 20 integriert, was weiter unten erläutert ist.

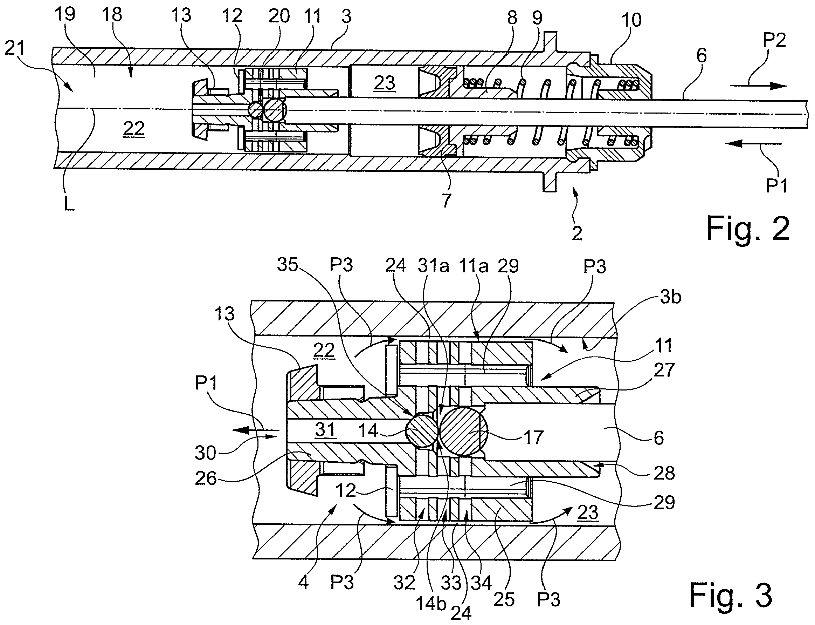

Gemäß Fig. 2 ist der Liquiddämpfer 2 in einer Ausgangs- bzw. Bereitschaftsstellung dargestellt, wonach die Kolbenstange 6 über ihre wesentliche Länge aus dem hier beispielhaft zylindrischen hohlen Gehäuse 3 ausgefahren ist. In einem vom Gehäuse 3 umschlossenen Innenvolumen 18 des Gehäuses 3 ist ein Fluid 19 bzw. ein Dämpffluid wie zum Beispiel ein Silikonöl eingeschlossen.

Der Liquiddämpfer 2 ist in dem gezeigten Ausführungsbeispiel derart verwendet, dass das Gehäuse 3 positionsfest ist, zum Beispiel an einer Korpusschiene einer Schubladen-Schienenführung für eine Schublade befestigt ist, und die Kolbenstange 6 mit dem betreffenden Möbelteil wie eine Schublade verbunden bzw. bewegungsgekoppelt ist. Über eine jeweilige Teillänge ist die Kolbenstange 6 mit den daran vorhandenen Elementen in Schließrichtung P1 und in eine entgegengesetzte Öffnungsrichtung P2 in einem vom Innenvolumen 18 bereitgestellten Verschieberaum 21 verschiebbar. Die Dämpf- bzw. Schließrichtung P1 und die Öffnungsrichtung P2 sind auf die Verschiebe- bzw. Bewegungsrichtung des Möbelteils relativ zu einem Möbelkorpus bezogen. Durch die Kolbenmittel 4 bzw. den Kolben 11 ist der Verschieberaum 21 in zwei Teilvolumina 22, 23 aufgeteilt, deren Ausdehnung abhängig ist von der Verschiebstellung der Kolbenstange 6 bzw. den Kolbenmitteln 4.

Die Verschieberichtungen P1 und P2 verlaufen parallel zu einer Längsachse L des Liquiddämpfers 2. Die Vorrichtung 1 ist symmetrisch aufgebaut, wobei die Längsachse L und eine zentrische Längsachse der Kolbenstange 6 auf einer gemeinsamen Raumachse liegen.

Die Kolbenstange 6 ist über ihre längsendseitige aus dem Gehäuse 3 am Deckel 10 überstehende Teillänge mit dem Möbelteil wie zum Beispiel der Schublade gekoppelt.

Im Regel-Dämpfungsbetrieb gemäß Fig. 2 und 3 bei sich schließendem Möbelteil bzw. wenn die Kolbenstange 6 und die Kolbenmittel 4 sich in Schließrichtung P1 verschieben, bei einer üblichen Viskosität des Fluids 19 von z. B. circa 200 mPa s ist die Überdruck-Ventilanordnung 20 geschlossen. Es herrscht ein vergleichsweise niedriger Druck von zum Beispiel unter 40 bar im ersten Teilvolumen 22, das in Schließrichtung P1 vorlaufend zu den Kolbenmitteln 4 bzw. zwischen den Kolbenmitteln 4 und dem Gehäuseflansch 3a liegt. Entsprechend der Verschiebung der Kolbenmittel 4 in Richtung P1 strömt ein Teil des Fluids 19 vom Teilvolumen 22 in das Teilvolumen 23, was über einen Regel-Strömungsweg 24 gemäß Strömungspfeil P3 erfolgt (s. Fig. 3). Der Strömungsweg 24 ist hier beispielhaft als Ringspalt ausgebildet und ergibt sich durch geringe Durchmesserunterschiede zwischen einer Innenwandung 3b des Gehäuses 3 und der umfänglichen Außenseite 11a des Kolbens 11. Der Kolben 11 weist einen in das Teilvolumen 22 hineinragenden zentrischen Zapfenabschnitt 26 auf, auf dem die Dichtscheibe 12 axial begrenzt verschiebbar sitzt. Die mittig gelochte Dichtscheibe 12 wird bei der Schließbewegung des Möbelteils strömungsbedingt stirnseitig gegen einen Grundkörper 25 des Kolbens 11 gedrückt und verschließt Durchgangsbohrungen 29 im Grundkörper 25, die parallel und außermittig zur Längsachse L durch den Grundkörper 25 sich hindurch erstrecken.

An der anderen axialen Seite des Grundkörpers 25 ist ein weiterer Zapfenabschnitt 27 mit einer zentrischen Öffnung 28 vorhanden, in welcher ein Ende der Kolbenstange 6 fixiert ist, zum Beispiel eingeschraubt ist.

Zur Bereitstellung eines Überdruck-Strömungsweges 30 sind zentrisch im Zapfenabschnitt 26 eine Ventilbohrung 31, als erster Strömungsweg-Abschnitt des Überdruck-Strömungsweges 30, und im Grundkörper 25 mehrere bzw. hier drei radial verlaufende Querbohrungen 32, 33 und 34 als weitere Strömungsweg-Abschnitte des Überdruck-Strömungsweges 30 vorhanden. Die zueinander beispielhaft hier parallelen Querbohrungen 32, 33, 34 erstrecken sich radial durch den Grundkörper 25, von einer Stelle auf der Außenseite 11a bis zu einer radial gegenüberliegenden Stelle auf der Außenseite 11a. Jede der drei Querbohrungen 32, 33, 34 schneidet die zwei oder mehr Durchgangsbohrungen 29.

Der Verschlusskörper 14 wird durch die elastische Vorspannung des Federelements 16 bzw. der Gummikugel 17 gegen einen Ventilsitz 35 der Überdruck-Ventilanordnung 20 gedrückt, so dass der Überdruck-Strömungsweg 30 verschlossen ist vom Verschlusskörper 15.

Der Ventilsitz 35 wird durch einen ringförmig geschlossenen Öffnungsrand der Ventilbohrung 31 gebildet im Bereich eines Übergangs zur Querbohrung 32 bzw. zu einem sich abgestuft im Durchmesser sich erweiternden Innenabschnitt 31a der Ventilbohrung 31. Der Innenabschnitt 31a ist durch den Verschlusskörper 15 von einem verbleibenden Abschnitt der Ventilbohrung 31 im Zapfenabschnitt 26, der in das Teilvolumen 22 mündet, trennbar und freigebbar, abhängig vom Fluid-Druck im Teilvolumen 22.

Im Regel-Dämpfungsbetrieb reicht die Andrückkraft bzw. die elastische Vorspannung der Gummikugel 17 auf den Verschlusskörper 14 aus, um trotz des Gegendrucks des Fluids 19 im Teilvolumen 22 den Verschlusskörper 14 fest gegen den Ventilsitz 35 zu drücken, was Fig. 2 und 3 zeigen. Die Dämpfwirkung ist in dem vergleichsweise geringen Überström-Querschnitt des Regel-Strömungsweges 24 begründet. Dies führt zum Abbremsen der Bewegung der Kolbenmittel 4 bzw. der Kolbenstange 6 in Schließrichtung P1 und damit zur Dämpfung und gleichmäßigen bzw. abgebremsten Schließbewegung des mit der Kolbenstange 6 gekoppelten Möbelteils bzw. zum Beispiel der Schublade.

Demgemäß ist der durchströmbare Querschnitt des Regel-Strömungswegs 24 deutlich geringer als der durchströmbare Querschnitt des Überdruck-Strömungsweg 30, womit vorteilhaft in einer nachfolgend beschriebenen Überdrucksituation im Teilvolumen 22 ein schneller Überdruck-Abbau im Teilvolumen 22 verglichen zum Druck im Teilvolumen 23 bzw. eine schneller Druckangleichung in den beiden Teilvolumina 22 und 23 realisiert ist.

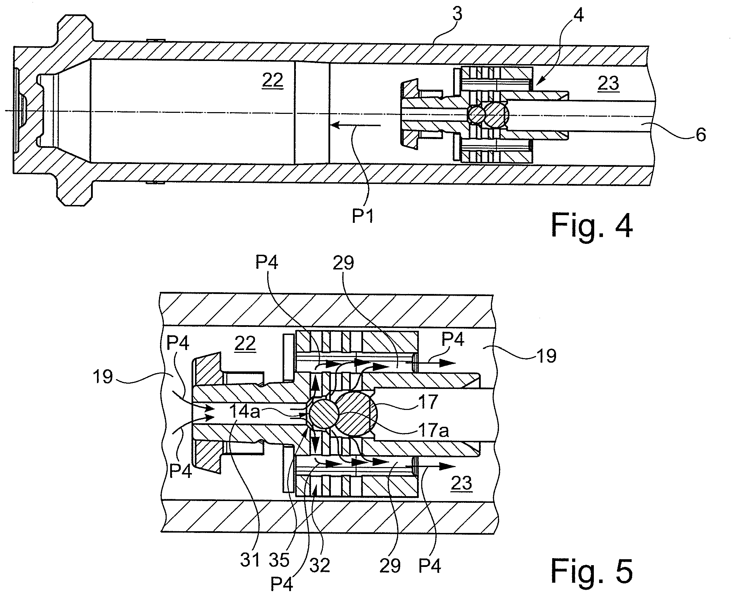

Ein Überdruck-Dämpfungsbetrieb, zum Beispiel, wenn z. B. die Viskosität des Fluids 19 erhöht ist bzw. im Bereich von z. B. 2000 mPa s liegt und/oder das Möbelteil beim Schließen stark in Schließrichtung beschleunigt wird, zeigen die Fig. 4 und 5. Dabei ist die Überdruck-Ventilanordnung 20 geöffnet, so dass der Überdruck-Strömungsweg 30 geöffnet ist. Das Öffnen der Überdruck-Ventilanordnung 20 erfolgt bei einem Grenzdruck im Teilvolumen 22 von zum Beispiel 40 bar. Der Fluid-Druck im Teilvolumen 22 wirkt über die Ventilbohrung 31 auch auf eine erste Seite 14a des Verschlusskörpers 14, die an die Ventilbohrung 31 angrenzt bzw. dem Teilvolumen 22 zugewandt ist. Dadurch wird der Verschlusskörper 14 in Richtung P2 gegen den Andrückabschnitt 15 bzw. die Gummikugel 17 gedrückt, so dass in der Oberfläche der Gummikugel 17 eine Vertiefung 17a entsteht. Demgemäß drückt eine zweite Seite 14b des Verschlusskörpers 14 gegen eine Andrückseite der Gummikugel 17. Dabei hebt der Verschlusskörper 14 sich ab vom Ventilsitz 35 und ein Durchlass für Fluid 19 am Ventilsitz 35 vorbei wird ermöglicht. Das unter Überdruck stehende Fluid 19 im Teilvolumen 22 kann in das Teilvolumen 23 überströmen. Dabei strömt das Fluid 19 gemäß Strömungsverlauf in Richtung P4 über die Ventilbohrung 31 vorbei am Ventilsitz 35 und dem abgehobenen Verschlusskörper 14 in den Innenabschnitt 31a und von dort weiter über die Querbohrungen 32-34 in die Durchgangsbohrungen 29 bis zu den kolbenstangenseitigen Öffnungen der Durchgangsbohrungen 29. Der Überdruck-Strömungsweg 30 umfasst demgemäß die Abschnitte 31, 35, 31a und 29. Der Regel-Strömungsweg 24 bleibt dabei erhalten, macht aber am gesamten pro Zeiteinheit während der geöffneten Überdruck-Ventilanordnung 20 aus dem ersten Teilvolumen 22 in das zweite Teilvolumen 23 überströmenden Fluid 19 nur einen untergeordneten Anteil aus.

Damit wird bei Belastungsspitzen, die am Liquiddämpfer 2 aufgrund einer Überdruck-Situation in dem ersten Teilvolumen 22 des Verschieberaums 21 wirken, eine Beschädigung am Liquiddämpfer und/oder dem Möbelteil oder der dazugehörigen Führungseinheit vermieden und außerdem eine bei einem Nutzer des Möbels als angenehm empfundene Schließcharakteristik bei akzeptabler Schließzeit der gedämpften Schließbewegung des Möbelteils ermöglicht.

Die Überdrucksituation ist insbesondere bei Einsätzen des Liquiddämpfers 2 bei tiefen Umgebungstemperaturen wie beim Einsatz in Kühl- oder Gefrierschränken vorteilhaft und praxisrelevant. Bei diesen Anwendungen herrschen Umgebungstemperaturen von unter z. B. minus 18 Grad Celsius. Denn dann kann mit üblichen Dämpffluiden, die für Einsätze in Bereichen um die Zimmertemperatur herum konzipiert sind bzw. deren Viskosität bei tiefen Temperaturen bis unter minus 18 Grad Celsius stark ansteigt, mit bisherigen Maßnahmen kein befriedigendes Ergebnis erzielt werden. Dem wird mit der erfindungsgemäßen Vorrichtung entgegengewirkt, welche vorteilhaft ist, weil diese insbesondere kompakt und unkompliziert aufgebaut ist und sicher funktioniert.

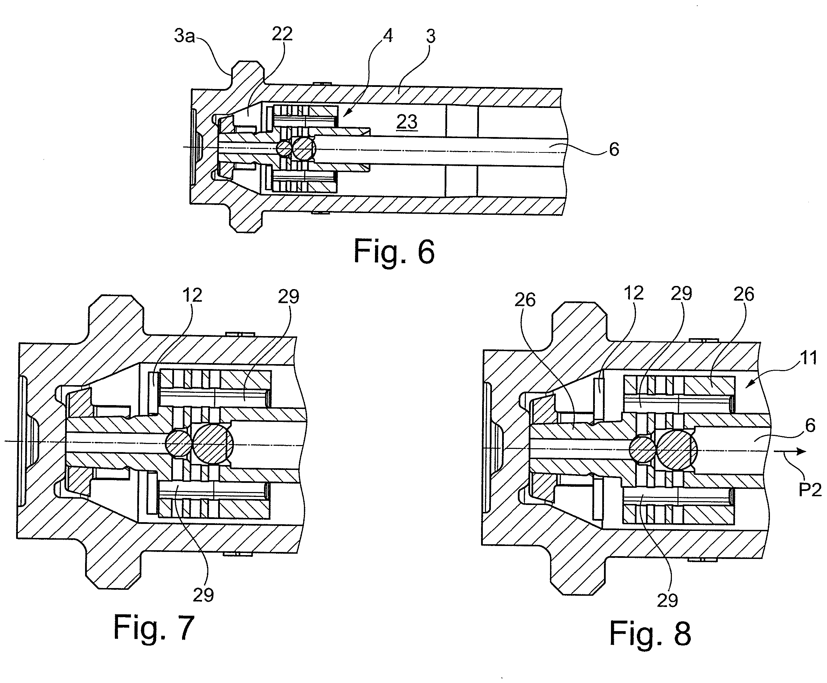

Die Fig. 6 und 7 verdeutlichen die Zusammenhänge in einem statischen Zustand, wenn die Kolbenstange 6 maximal weit in Schließrichtung P1 bzw. in das Gehäuse 3 hineingeschoben ist und die Kolbenmittel 4 am Ende eines Dämpfungsvorgangs eine Endlage im Gehäuse 3 erreichen und das Sicherungselement 13 innenseitig am Gehäuseflansch 3a ansteht. Das Teilvolumen 22 erreicht seine minimale Ausdehnung und das Teilvolumen 23 erreicht seine maximale Ausdehnung.

Durch das Überströmen von Fluid 19 vom Teilvolumen 22 in das Teilvolumen 23 in der vorhergehenden Überdrucksituation bis zum Druckausgleich in den Teilvolumina 22 und 23 wird der Verschlusskörper 14 durch die elastische Vorspannung der eingedellten Gummikugel 17 zurückbewegt in Richtung auf den Ventilsitz 35 hin und stützt sich dort ab und dichtet die Ventilbohrung 31 ab. Die Überdruck-Ventilanordnung 20 und damit der Überdruck-Strömungsweg 30 sind wieder geschlossen.

In Fig. 8 ist ausgehend vom ruhenden Zustand gemäß der Fig. 6 und 7 angedeutet, dass die Dichtscheibe 12 mit Beginn der Rückbewegung der Kolbenstange 6 mit den Kolbenmitteln 4 in Öffnungsrichtung P2 in Richtung weg vom Grundkörper 26 des Kolbens 11 bzw. axial entlang des Zapfenabschnitts 26 bewegt wird. Dies erfolgt z.B. gekoppelt mit einer Öffnungsbewegung des Möbelteils bzw. der Schublade. Hierbei strömt Fluid 19 durch die Durchgangsöffnungen 29 zurück vom Teilvolumen 23 in das Teilvolumen 22, was durch die vergleichsweise große Querschnittsfläche der Durchgangsbohrungen 29 mit einem entsprechend relativ großen Volumenstrom möglich ist, so dass das Öffnen des mit der Kolbenstange 6 gekoppelten Möbelteils ohne merklichen Widerstand erfolgen kann. Der Liquiddämpfer 2 wird in die Ausgangs- bzw. Bereitschaftsstellung gemäß Fig. 2 gebracht. Der Liquiddämpfer 2 ist bereit für die Bewegungsdämpfung der nächsten Schließbewegung des Möbelteils.

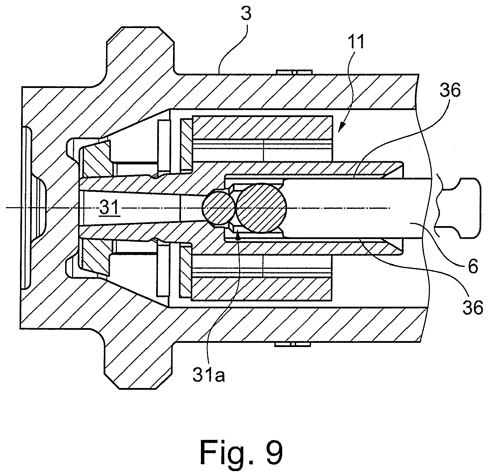

Die Variante einer erfindungsgemäßen Vorrichtung gemäß Fig. 9 unterscheidet sich von der ersten erfindungsgemäßen Vorrichtung 1 dadurch, dass anstelle der Querbohrungen 32-34 Fluidkanäle 36 zwischen dem Innenabschnitt 31a und einem kolbenstangenseitigen Ende des Kolbens 11 vorhanden sind. Die zwei oder mehr Fluidkanäle 36 sind zur Kolbenstange 6 umfänglich verteilt ausgebildet zur Bereitstellung eines weiteren Strömungsweg-Abschnitts des Überdruck-Strömungswegs 30. Die Fluidkanäle 36 verlaufen parallel zum Gehäuse 3 bzw. parallel aber radial nach außen versetzt zum ersten Strömungsweg-Abschnitt gemäß der Ventilbohrung 31. Die Fluidkanäle 36 sind zwischen einer Außenseite der Kolbenstange 6 und der Innenseite der Öffnung 28 im Grundkörper 25 und im Zapfenabschnitt 27 ausgebildet. Damit kann in einer Überdruck-Situation Fluid vom ersten Teilvolumen 22 über die Ventilbohrung 31, den Innenabschnitt 31a und die Fluidkanäle 36 in das zweite Teilvolumen 23 überströmen.

### Bezugszeichenliste

- 1: Vorrichtung
- 2: Liquiddämpfer
- 3: Gehäuse
- 3a: Gehäuseflansch
- 3b: Innenwandung
- 4: Kolbenmittel
- 5: Kolbenbaugruppe
- 6: Kolbenstange
- 7: Trennkolben
- 8: Stützelement
- 9: Druckfeder
- 10: Deckel
- 11: Kolben
- 11a: Außenseite
- 12: Dichtscheibe
- 13: Sicherungselement
- 14: Verschlusskörper
- 14a, 14b: Seite
- 15: Andrückabschnitt
- 16: Federelement
- 17: Gummikugel
- 17a: Vertiefung
- 18: Innenvolumen
- 19: Fluid
- 20: Überdruck-Ventilanordnung
- 21: Verschieberaum
- 22, 23: Teilvolumen
- 24: Regel-Strömungsweg
- 25: Grundkörper
- 26, 27: Zapfenabschnitt
- 28: Öffnung
- 29: Durchgangsbohrung
- 30: Überdruck-Strömungsweg
- 31: Ventilbohrung
- 31a: Innenabschnitt
- 32-34: Querbohrung
- 35: Ventilsitz
- 36: Fluidkanal

## Patentansprüche

1. Vorrichtung (1) zur Bewegungsdämpfung eines relativ zu einem Möbelkorpus bewegbaren Möbelteils, insbesondere Möbelteil-Dämpfvorrichtung, umfassend ein Gehäuse (3), das einen mit einem Fluid (19) beaufschlagten Verschieberaum (21) umschließt, in welchem Kolbenmittel (4) aufgenommen sind, wobei das Gehäuse (3) oder die Kolbenmittel (4) mit dem Möbelteil koppelbar sind, so dass bei einer Relativ-Schiebebewegung zwischen dem Gehäuse (3) und den Kolbenmitteln (4), die Bewegungsdämpfung des Möbelteils erfolgt, wobei in einem Regel-Dämpfungsbetrieb der Vorrichtung (1) ein Teil des Fluids (19) über einen Regel-Strömungsweg (24) von einem ersten Teilvolumen (22) des Verschieberaums (21) in ein zweites Teilvolumen (23) des Verschieberaums (21) strömt, wobei die Aufteilung des Verschieberaums (21) in die beiden Teilvolumina (22, 23) durch die Verschiebeposition zwischen den Kolbenmitteln (4) und dem Gehäuse (3) bestimmt ist, wobei für einen Überdruck-Dämpfungsbetrieb der Vorrichtung (1) die Kolbenmittel (4) einen Überdruck-Strömungsweg (30) und einen Verschlusskörper (14) zum Absperren und Freigeben des Überdruck-Strömungsweges (30) umfassen, wobei eine erste Seite (14a) des Verschlusskörpers (14) vom Druck im ersten Teilvolumen (22) des Verschieberaums (21) beaufschlagt ist und wobei in einer Überdrucksituation im ersten Teilvolumen (22) des Verschieberaums (21) der Überdruck-Strömungsweg (30) freigegeben ist für ein Überströmen von Fluid (19) vom ersten Teilvolumen (22) in das zweite Teilvolumen (23), **dadurch gekennzeichnet, dass** ein Andrückabschnitt (15) aus einem Elastomermaterial vorhanden ist, welcher mit einer Andrückseite gegen eine zweite Seite (14b) des Verschlusskörpers (14) derart andrückt, dass im Regel-Dämpfungsbetrieb der Vorrichtung (1) der Verschlusskörper (14) den Überdruck-Strömungsweg (30) absperrt, wobei bei einer Überdrucksituation im ersten Teilvolumen (22) des Verschieberaums (21) der Verschlusskörper (14) eine Ausweichbewegung in Richtung des Andrückabschnitts erfährt, wobei entsprechend der Ausweichbewegung des Verschlusskörpers (14) eine Vertiefung (17a) in der Oberfläche des Andrückabschnitts durch elastische Verformung des Andrückabschnitts ausbildbar ist und ein Eintauchen des Verschlusskörpers (14) in die Vertiefung (17a) stattfindet.

2. Vorrichtung nach Anspruch 1, **dadurch gekennzeichnet, dass** der Andrückabschnitt als separates Bauteil zu verbleibenden Teilen der Vorrichtung (1) ausgebildet ist.

3. Vorrichtung nach Anspruch 1 oder Anspruch 2, **dadurch gekennzeichnet, dass** der Andrückabschnitt im Inneren der Kolbenmittel (4) untergebracht ist.

4. Vorrichtung nach einem der vorhergehenden Ansprüche, **dadurch gekennzeichnet, dass** der Andrückabschnitt als ein Bauteil (17) mit einer nach außen gewölbten Oberflächenform ausgebildet ist.

5. Vorrichtung nach einem der vorhergehenden Ansprüche, **dadurch gekennzeichnet, dass** der Andrückabschnitt als ein Vollmaterial-Bauteil (17) ausgebildet ist, wobei das Vollmaterial ein Elastomermaterial insbesondere ein Gummimaterial ist.

6. Vorrichtung nach einem der vorhergehenden Ansprüche, **dadurch gekennzeichnet, dass** eine Kolbenstange (6) vorhanden ist, welche mit den Kolbenmitteln (4) verbunden ist, wobei eine Raumachse in Verlängerung einer zentralen Längsachse der Kolbenstange (6) durch den Andrückabschnitt verläuft.

7. Vorrichtung nach einem der vorhergehenden Ansprüche, **dadurch gekennzeichnet, dass** der Andrückabschnitt in einem zentralen Hohlbereich eines Kolbens (11) der Kolbenmittel (4) untergebracht ist.

8. Vorrichtung nach einem der vorhergehenden Ansprüche, **dadurch gekennzeichnet, dass** der Andrückabschnitt zwischen einem Ende der Kolbenstange (6) und dem Verschlusskörper (14) angeordnet ist.

9. Vorrichtung nach einem der vorhergehenden Ansprüche, **dadurch gekennzeichnet, dass** ein Außenmaß des Andrückabschnitts nicht über ein Außenmaß der Kolbenstange (6) hinausgeht, insbesondere nicht über einen Durchmesser der Kolbenstange (6) hinausgeht.

10. Vorrichtung nach einem der vorhergehenden Ansprüche, **dadurch gekennzeichnet, dass** der Verschlusskörper (14) und/oder der Andrückabschnitt in einem Bereich vorhanden sind, in welchem der Überdruck-Strömungsweg (30) eine Richtungsänderung erfährt.

11. Vorrichtung nach einem der vorhergehenden Ansprüche, **dadurch gekennzeichnet, dass** der Überdruck-Strömungsweg (30) einen zur Längsachse des Gehäuses (3) parallelen ersten Strömungsweg-Abschnitt (31) umfasst und einen zum ersten Strömungsweg-Abschnitt (31) quer oder schräg oder parallel verlaufenden weiteren Strömungsweg-Abschnitt (29, 32-34, 36) umfasst.

12. Vorrichtung nach einem der vorhergehenden Ansprüche, **dadurch gekennzeichnet, dass** der Kolben (11) der Kolbenmittel (4) eine scheibenförmige Grundform aufweist, mit beidseitig axial vorstehenden Zapfenabschnitten (26, 27).

13. Vorrichtung nach einem der vorhergehenden Ansprüche, **dadurch gekennzeichnet, dass** ein Aufnahmeraum (31a) der Kolbenmittel (4) für die Unterbringung des Andrückabschnitts vorgesehen ist, wobei der Aufnahmeraum (31a) mit dem Überdruck-Strömungsweg (30) verbunden ist.

14. Führungsvorrichtung für die Bewegungsführung eines relativ zu einem Möbelkorpus bewegbaren Möbelteils mit einer Vorrichtung (1) nach einem der vorhergehenden Ansprüche.
